# EUROPÄISCHE PATENTSCHRIFT

(11) **EP 4 509 460 B1**
(45) Veröffentlichungstag und Bekanntmachung des Hinweises auf die Patenterteilung: **06.08.2025**
(21) Anmeldenummer: 24194014.7
(22) Anmeldetag: 12.08.2024
(51) Int. Cl.: B65G 69/24, B66F 11/04, B66F 17/00

(54) **ARBEITSBÜHNE FÜR VERLADEEINRICHTUNGEN**
WORKING PLATFORM FOR LOADING DEVICES
PLATE-FORME DE TRAVAIL POUR DISPOSITIFS DE CHARGEMENT

(30) Priorität: 15.08.2023 DE 202023104617 U; 15.08.2023 DE 102023121756; 14.09.2023 DE 102023124867
(43) Veröffentlichungstag der Anmeldung: 19.02.2025
(73) Patentinhaber: Hess GmbH, 64760 Oberzent (DE)
(72) Erfinder: Lechner, Franz, 64760 Oberzent (DE); Hess, Armin, 64760 Oberzent (DE)
(74) Vertreter: Rauschenbach, Marion

(56) Entgegenhaltungen:
- DE-U1- 202021 106 830
- US-A- 5 042 612
- US-B2- 7 140 467

## Beschreibung

Die vorliegende Erfindung bezieht sich auf das technische Gebiet der Transport- und Verladetechnik und betrifft eine mechanisch verfahrbare Arbeitsbühne für Verladeeinrichtungen, wie sie beispielsweise beim Verladen von Schüttgut oder Flüssigkeiten in Silo-Lastkraftwagen oder Eisenbahnwagons eingesetzt werden kann. Der Einsatz der erfindungsgemäßen Arbeitsbühne ist jedoch nicht auf das Verladen von Schüttgut oder Flüssigkeiten in Silo-Lastkraftwagen oder Eisenbahnwagons beschränkt, sondern kann beispielsweise auch für die Reinigung und Wartung von Fahrzeugen und Silobehältern eingesetzt werden.

Zum Beladen von beispielsweise Silo-Lastkraftwagen werden die Silo-Lastkraftwagen in eine spezielle Verladegasse des Lagerterminals des Verladebetreibers eingefahren und können auf einer Wiegeeinrichtung positioniert werden. Zum Befüllen der Silobehälter des Lastkraftwagens müssen vom Fahrer des LKW hierfür eine oder mehrere Domabdeckungen des Silobehälters geöffnet und die Einfüllvorrichtung in die Domöffnung des Silos eingeführt und gesichert werden. Nach dem Abschluss der Befüllung wird die Einfüllvorrichtung wieder vom Fahrzeug entfernt und die Domabdeckungen der Silobehälter vom Fahrer des LKW verschlossen. Anschließend kann der befüllte Lastkraftwagen aus der Verladegasse herausgefahren werden.

Es ist bekannt, dass in der Regel Silo-Lastkraftwagen ausschließlich eine rückwärtig am Fahrzeug vorgesehene Steigleiter und einen auf dem Silo angeordneten schmalen Trittsteg aufweisen, die jedoch keine Absturzsicherung für die Durchführung der vorbeschriebenen Tätigkeiten des Fahrers beim Befüllen eines Silos darstellen.

Zur Verbesserung der Absturzsicherheit werden deshalb durch die Betreiber der Verladestelle verschiedene Arbeitsbühnen bereitgestellt, die über dem einfahrenden Fahrzeug angeordnet werden und dem Bediener ermöglichen, von der Arbeitsbühne direkt auf das Fahrzeug zu gelangen.

Aus dem Stand der Technik sind verschiedene elektrische, hydraulische oder auch mechanische Lösungen für Arbeitsbühnen bekannt.

Aus der EP 3 792 130 A1 ist eine Absturzsicherung für eine Lauf- oder Arbeitsbühne bekannt, die mindestens zwei Stützpfosten umfasst, welche an ihren Fußpunkten mittels jeweils eines ersten Drehgelenks an der Lauf- oder Arbeitsbühne angelenkt sind. Diese sollen insbesondere ergonomischere Arbeitsbedingungen für das Bedienpersonal ermöglichen. Jeder Stützpfosten weist im Bereich des Fußpunktes einen Winkelhebel auf, dessen vom Stützpfosten entferntes distales Ende mittels eines zweiten Drehgelenkes mit einer die Winkelhebel aller Stützpfosten verbindenden starren Stange gekoppelt ist.

Aus der DE 6 608 859 U1 ist eine Falltreppe bekannt, insbesondere für Verlade- bzw. Arbeitsbühnen mit nach dem Prinzip der Parallelverstellung an den Treppenwangen angelenkten Treppenstufen, bei der die Schwenkverbindung zwischen der Bühnenkonstruktion und der Treppe aus einer feststehenden justierbaren Achse und einem diese konzentrisch umschließenden Rohr besteht, an dem die Treppenwangen befestigt sind. Zwischen dem Rohr und der Achse ist eine Spiralfeder angeordnet, die in der Mitte an einer feststehenden Halterung mit einem Ende an der Treppenwange und mit dem anderen Ende an der Treppenwange befestigt ist.

Die Firma Emsland Food bietet zur Verladung ihrer Produkte in der Verladestelle eine Lösung für eine Arbeitsbühne an, bei der die Lücke zwischen der Arbeitsbühne in der Verladegasse und dem Laufsteg des Lastkraftwagens durch herunterklappbare Treppen überbrückt wird, wobei die Treppen mittels einer hydraulischen und elektrischen Steuerung zum Laufsteg des Fahrzeuges abgesenkt werden (https://vorschriften.bgnbranchenwissen.de/daten/bgn/akzente/akzente17/verladegasse.htm). Ein wesentlicher Nachteil dieser Lösung besteht darin, dass die herunterklappbaren Treppen kraftschlüssig auf dem Fahrzeug oder Silo aufliegen, wobei durch den entstehenden Kraftnebenschluss und das Gewicht der aufliegenden Treppen eine Eichbarkeit und Genauigkeit des Verladevorganges nicht gewährleistet ist.

Und auch bekannt ist eine Absturzsicherung für Straßentankfahrzeuge der Fa. Voortmann, bei der ein Schutzkorb mit einem Geländer direkt an der Klapptreppe oder dem Klapppodest montiert ist. Der Schutzkorb verfährt stets gemeinsam mit dem Übergang und steht in jeder Halteposition waagerecht (https://www.voortmann.de/verladetechnik).

Das Dokument US5042612A aus dem Stand der Technik beschreibt eine Arbeitsbühne, wie sie im Oberbegriff des Anspruchs 1 angegeben ist.

Nachteilig bei den bekannten Lösungen ist es, dass die Arbeitsbühnen keine ausreichende Absturzsicherung nach Arbeitsschutzrichtlinie gewährleisten und die Unfallverhütungsvorschriften nicht erfüllt werden. Zudem ist nachteilig, dass die Arbeitsbühnen unzureichend auf unterschiedliche Fahrzeugtypen anpassbar sind und deshalb beim Einsatz der Arbeitsbühnen Beschädigungen an dem Silo-Lastkraftwagen auftreten können. Und auch ist nachteilig, dass bekannte Lösungen durch den Einsatz von elektrischen und hydraulischen Komponenten kosten- und wartungsintensiv sind.

Die Aufgabe der vorliegenden Erfindung besteht in der Bereitstellung einer Arbeitsbühne für Verladeeinrichtungen, die eine verbesserte Absturzsicherung gewährleistet, flexibel auf unterschiedliche Einsatzbedingungen anpassbar ist und zudem kostengünstig und wartungsarm ist.

Die Aufgabe wird mit den technischen Merkmalen des oder der Hauptansprüche gelöst. Vorteilhafte Ausgestaltungen sind Gegenstand der Unteransprüche.

Mit der erfindungsgemäßen Lösung wird eine manuell bedienbare und mechanisch verfahrbare Arbeitsbühne für Verladeeinrichtungen bereitgestellt, die eine verbesserte Absturzsicherung gewährleistet, flexibel auf unterschiedliche Einsatzbedingungen anpassbar ist und zudem kostengünstig und wartungsarm ist.

Gelöst wird die erfindungsgemäße Aufgabe mit einer mechanisch verfahrbaren Arbeitsbühne für Verladeeinrichtungen, aufweisend eine Tragkonstruktion, an der über mindestens ein Führungselement ein mechanisch verfahrbarer Arbeitskorb, der eine Rahmenkonstruktion, mindestens ein Absturzsicherungselement und mindestens ein Trittelement aufweist, angeordnet ist, wobei die Tragkonstruktion mindestens ein Schließelement aufweist, dessen Öffnung mit dem Verfahrweg des Arbeitskorbes gekoppelt ist und mit einem manuell zu betätigenden Positionssicherungselement funktionell verbunden ist, wobei das Positionssicherungselement in das mindestens eine Führungselement eingreift, wobei der Arbeitskorb in dessen Arbeitshöhe durch das in das mindestens eine Führungselement eingreifende Schließelement variabel positionierbar ist.

Vorteilhafterweise ist in der Tragkonstruktion mindestens ein geführtes Kontergewicht vorhanden, das mit dem Arbeitskorb verfahrbar gekoppelt ist.

Auch voreilhafterweise ist die Tragkonstruktion beweglich mit einem decken- oder bodenseitigen Rollfahrwerk und/oder einem Verfahrwagen einer Verladegarnitur verbunden.

In einer vorteilhaften Ausgestaltung kann vorgesehen sein, dass mehrere Führungselemente vorhanden sind, deren Verfahrweg über einen gemeinsamen Antrieb synchronisiert sind.

Auch ist es von Vorteil, wenn das mindestens eine Führungselement eine Linearführung ist.

Ebenfalls vorteilhafterweise weist die Rahmenkonstruktion des Arbeitskorbes mindestens ein mehrdimensional bewegliches Schließkantensicherungselement auf, wobei besonders vorteilhaft das mindestens eine Schließkantensicherungselement eine gummielastische Beschichtung aufweist und/oder als gummielastisches Hohlprofil ausgebildet ist.

In einer weiteren vorteilhaften Ausbildung der Arbeitsbühne weist die Tragkonstruktion mindestens ein Arretierungselement auf, das in ein im Führungselement vorgesehenes Formelement eingreift, wobei besonders vorteilhaft das Arretierungselement ein selbstsichernder Arretierungsbolzen ist.

Vorteilhafterweise ist der Arbeitskorb mittels eines mechanischen Antriebselementes manuell bewegbar ist, wobei besonders vorteilhaft ist, wenn das Antriebselement eine manuelle Kurbeleinrichtung ist, die mit einer Getriebeeinheit verbunden ist.

In einer vorteilhaften Ausgestaltung ist die Getriebeeinheit ein Schneckengetriebe.

Auch ist es von Vorteil, wenn das Trittelement aus mehreren Einzelelementen gebildet ist, wobei mindestens ein Einzelelement innerhalb des Arbeitskorbes mindestens bidirektional verfahrbar und/oder klappbar ist. Besonders vorteilhaft ist dabei, wenn ein im Arbeitskorb angeordnetes Einzelelement aus mehreren lamellenartigen Segmenten zusammengesetzt ist und eine Öffnung aufweist.

Und auch ist es vorteilhaft, wenn das mindestens eine Einzelelement mechanisch, hydraulisch und/oder elektrisch verfahrbar ist.

Erfindungsgemäß werden mit der vorgeschlagenen Arbeitsbühne die technischen Vorteile und Wirkungen erreicht, dass die mechanisch verfahrbare Arbeitsbühne ohne den Einsatz elektrischer, elektronischer und hydraulischer Elemente und damit einzig manuell betrieben werden kann.

So wird eine mechanisch verfahrbare Arbeitsbühne für Verladeeinrichtungen bereitgestellt, die eine Tragkonstruktion aufweist, an der über Führungselemente ein mechanisch verfahrbarer Arbeitskorb angeordnet ist. Der Arbeitskorb weist eine mit dem oder den Führungselementen verbundene Rahmenkonstruktion auf, die zusätzlich mindestens ein Absturzsicherungselement und mindestens ein Trittelement aufweist. Vorstellbar ist, dass der Arbeitskorb mehrere Trittbretter aufweist, wobei mindestens ein Trittbrett davon schwenkbar ausgeführt sein kann. Die schwenkbare Ausführung mindestens eines Trittbrettes ermöglicht eine flexible Einstellung des Trittweges in Abhängigkeit von den technischen Voraussetzungen des zu beladenden Fahrzeuges und Silos.

Erfindungsgemäß weist die Tragkonstruktion mindestens ein Schließelement auf, dessen Bedienfunktion und damit Öffnung ausschließlich mit einem erreichten und sicherheitsrelevanten Verfahrweg des Arbeitskorbes gekoppelt ist. Unter einem derartigen sicherheitsrelevanten Verfahrweg des Arbeitskorbes soll verstanden werden, dass das Absenken des Arbeitskorbes entsprechend den Sicherheitsvorschriften für Arbeitsbühnen und den geltenden Unfallverhütungsvorschriften derart und soweit über dem zu beladenden Fahrzeug oder Silo erfolgt, dass ein Abstürzen des Bedieners zwischen Arbeitskorb und Fahrzeug oder Silo verhindert wird.

Hierfür ist erfindungsgemäß vorgesehen, dass erst beim Erreichen einer entsprechenden Absenktiefe des Arbeitskorbes ein manuell zu bedienendes und in mindestens ein Führungselement eingreifendes Positionssicherungselement vorhanden ist, dass im mechanischen Zusammenwirken mit dem Schließelement den Zugang zum Arbeitskorb freigibt, wobei der Arbeitskorb in dessen Arbeitshöhe durch das in das mindestens eine Führungselement eingreifende Schließelement variabel positionierbar ist.

Eine derartige zwingend zu erreichende Positionierung des Arbeitskorbes bei gleichzeitiger Freigabe des Schließelementes kann beispielsweise über Bohrungen oder Taschen in der Tragkonstruktion formschlüssig erfolgen, in die beispielsweise Schließbolzen oder ähnlich wirkende Schließriegel eingreifen.

Die technisch zusammenwirkende Kombination von Schließelement und Positionssicherungselement hat den technischen Vorteil, dass nur beim Erreichen einer bestimmten Position des Arbeitskorbes der Zugang zum Arbeitskorb, beispielsweise über eine erst dann sich öffnende Tür, freigegeben wird, wodurch die Sicherheit bei der Benutzung der Arbeitsbühne für den Bediener signifikant verbessert wird.

Um die Bedienung des Arbeitskorbes beim Verfahren zu erleichtern, kann vorteilhafterweise vorgesehen sein, dass in der Tragkonstruktion mindestens ein geführtes Kontergewicht vorhanden ist, das mit dem Arbeitskorb verfahrbar gekoppelt ist. Die Ausgestaltung des mindestens einem Kontergewichts kann derart realisiert sein, dass der erforderliche Krafteinsatz des Bedieners um ein Vielfaches reduziert ist, wodurch eine besonders komfortable und leicht manuell zu bedienende Arbeitsbühne bereitgestellt wird.

Weiterhin kann für eine flexible Anpassung der Position der Arbeitsbühne an verschiedene Fahrzeuge und/oder Siloaufbauten vorteilhafterweise vorgesehen sein, dass die Tragkonstruktion beweglich mit einem decken- oder bodenseitigen Rollfahrwerk verbunden ist. So ist vorstellbar, dass die Arbeitsbühne über eine an der Decke der vorgesehene Laufkatze oder über in bodenseitigen Führungsschienen über Rollen bewegbar ausgestaltet ist.

Vorstellbar ist auch, dass die Arbeitsbühne mit einem Verfahrwagen einer Verladegarnitur verbunden ist, wodurch die Arbeitsbühne entlang des zu beladenden Fahrzeuges horizontal verfahren und der zum Beladen erforderliche Laderüssel in flexibler Weise an unterschiedliche Domöffnungen des Silos geführt und platziert werden kann. Ein wesentlicher technischer Vorteil dieser Lösung besteht auch darin, dass der Verladerüssel stets zentrisch im Arbeitskorb angeordnet ist, wodurch der Arbeitskorb in seinen Abmessungen reduziert und damit kosten- und materialsparend hergestellt werden kann. Zudem besteht ein weiterer Vorteil darin, dass die Sicherheit des Bedieners weiter verbessert wird, da unerwünschte Relativbewegungen zwischen Verladerüssel und Arbeitskorb vermieden werden.

In einer vorteilhaften Ausgestaltung der Arbeitsbühne kann vorgesehen sein, dass mehrere Führungselemente vorhanden sind, deren Verfahrwege über einen gemeinsamen Antrieb synchronisiert sind. In diesem Fall ist gewährleistet, dass der Arbeitskorb stets in einer waagerechten Position verfahren wird, wodurch unter anderem eine Kollision des Arbeitskorbes mit dem zu ladenden Fahrzeug oder Silo vermieden wird. Vorteilhafterweise sind das oder die Führungselemente als Linearführen ausgebildet, wodurch eine exakte Bewegungsrichtung mit einer im Wesentlichen reibungsfreien Translation kombiniert ist.

Zur wirksamen Vermeidung von Beschädigungen des Fahrzeuges oder Solis kann vorteilhafterweise vorgesehen sein, dass bei auftretendem Kraft- und Formschluss die Rahmenkonstruktion des Arbeitskorbes mindestens ein mehrdimensional bewegliches Schließkantensicherungselement aufweist.

Das Schließkantensicherungselement kann vorteilhafterweise mit einer gummielastischen Beschichtung ausgebildet und als vertikal bewegliches Profilelement angeordnet sein. In einer vorteilhaften Ausgestaltung kann das Schließkantenelement ein gummielastisches Hohlprofil sein, wodurch eine verbesserte Dämpfung des Schließkantensicherungselementes gegenüber dem Fahrzeug oder Silo erreicht wird.

Das Schließkantensicherungselement verhindert beim Absenkens des Arbeitskorbes eine Krafteinwirkung der Rahmenkonstruktion des Arbeitskorbes und damit wirkungsvoll eine Beschädigung des Fahrzeuges oder Silos. Zudem wird der Spalt zwischen Arbeitskorb und Fahrzeug oder Silo signifikant verkleinert, wodurch die Absturzgefahr des Bedieners verringert und die Sicherheit auf der Arbeitsbühne verbessert wird.

Zur weiteren Verbesserung der Sicherheit und zum Schutz des Bedieners sowie zur Kollisionsvermeidung der Arbeitsbühne mit einem Fahrzeug kann vorteilhafterweise vorgesehen sein, dass die Tragkonstruktion mindestens ein Arretierungselement aufweist, das in ein im Führungselement vorgesehenes Formelement beispielsweise formschlüssig eingreift. Ein Formelement kann beispielsweise eine Materialaussparung im Führungselement sein und ein vorteilhaftes Arretierungselement kann ein selbstsichernder Arretierungsbolzen sein.

Das Arretierungselement dient der Sicherung der Position des Arbeitskorbes, sofern dieser nicht von einem Bediener benötigt wird. Dadurch wird insbesondere die Kollision des Arbeitskorbes mit einem einfahrenden oder ausfahrenden Fahrzeug verhindert, da durch das Arretierungselement die obere Position des Arbeitskorbes gesichert und gewährleistet ist. Erst durch die Entriegelung des Arretierungselementes durch den Bediener wird der nach unten gerichtete Verfahrweg des Arbeitskorbes freigegeben.

Zum erleichterten manuellen Verfahren des Arbeitskorbes kann vorteilhafterweise vorgesehen sein, dass der Arbeitskorb mittels eines mechanischen Antriebselementes bewegbar ist, wobei besonders vorteilhaft das Antriebselement eine manuelle Kurbeleinrichtung ist, die mit einer Getriebeeinheit verbunden ist. Um ein unbeabsichtigtes und durch das Eigengewicht des Arbeitskorbes verursachtes Absenken des Arbeitskorbes zu vermeiden, kann vorteilhafterweise eine selbsthemmende Getriebeeinheit, beispielsweise ein Schneckengetriebe, vorgesehen sein.

In einer vorteilhaften Ausgestaltung der Arbeitsbühne kann vorgesehen sein, dass das Trittelement aus mehreren Einzelelementen gebildet ist, wobei mindestens ein Einzelelement innerhalb des Arbeitskorbes horizontal verfahrbar und/oder klappbar ist.

Die Klappbarkeit und/oder Verfahrbarkeit mindestens eines Einzelelementes ermöglicht es, dass die Trittfläche individuell auf die unterschiedlichen Fahrzeugtypen und Ausstattungen angepasst werden kann, sodass Kollisionen des Arbeitskorbes mit dem Fahrzeug in einfacher Weise vermieden werden.

Von besonderem Vorteil ist es, wenn im Arbeitskorb eines angeordneten Einzelelementes eine Öffnung vorhanden ist, die für den Zugang zum Domdeckel beispielsweise eines Silos vorgesehen ist. Um eine genaue Positionierung der Öffnung über dem Dom des Silos erreichen zu können, ist vorteilhafterweise vorgesehen, dass dieses Einzelelement aus mehreren lamellenartigen Segmenten zusammengesetzt ist, wobei das Einzelelement mindestens bidirektional verfahrbar ist.

Das mindestens bidirektionale verfahre und aus den lamellenartigen Segmenten und der Öffnung zusammengesetzte Einzelelement hat den wesentlichen technischen Vorteil, dass einzelne Segmente außerhalb des Arbeitskorbes raumsparend verbracht und der Überhang des lammellenartigen Einzelelementes außerhalb des Arbeitskorbes wesentlich verringert. Das mindestens eine lamellenartige Einzelelement kann vorteilhafterweise mechanisch, hydraulisch und/oder elektrisch verfahrbar sein.

In der Zusammenschau liegen die technischen Vorteile und Wirkungen der vorliegenden Erfindung darin, dass eine Arbeitsbühne für Verladeeinrichtungen bereitgestellt wird, die
- ohne elektrische, elektronische und/oder hydraulische Elemente betrieben wird und ausschließlich manuell bedienbar ist,
- eine erhöhte Sicherheit gegen Absturz eines Bedieners bietet,
- eine Beschädigung von Fahrzeugen oder Silo verhindert,
- eine verbesserte und gesicherte Bedienung des Arbeitskorbes der Arbeitsbühne gewährleistet und
- in der Herstellung, dem Betrieb und der Wartung kosten- und energiesparend ist.

Nachfolgend wird die Erfindung anhand eines Ausführungsbeispiels näher erläutert. Die dazugehörigen Figuren zeigen
- Figur 1: eine Perspektivansicht der Arbeitsbühne mit geschlossenem Schließelement,
- Figur 2: eine Detailansicht des Positionssicherungselementes,
- Figur 3: eine Detailansicht des Arretierungselementes,
- Figur 4: eine alternative Ausführung mit Antrieb, Getriebeeinheit und Kontergewichten,
- Figur 5: eine alternative Ausführung mit Verbindung des Arbeitskorbes mit einem Verfahrwagen und
- Figur 6: eine Ausführungsvariante mit verfahrbarem lamellenartigen Einzelelement.

### Ausführungsbeispiel

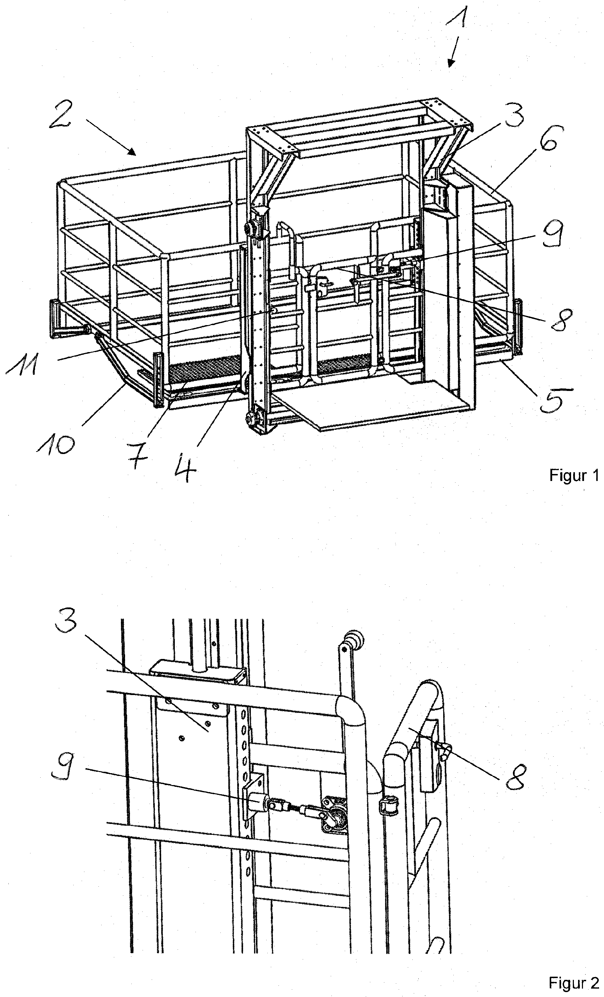

Die Figur 1 zeigt eine Perspektivansicht der vorgeschlagenen Arbeitsbühne 1 mit einer aus Stahl gefertigten Tragkonstruktion 3, die über Laufkatzen (nicht dargestellt) mit einer deckenseitig befestigten Laufschiene beweglich verbunden ist. Zudem ist ein Arbeitskorb 2 über zwei Linearführungen 4 mit der Tragkonstruktion 3 verbunden und darüber vertikal bewegbar. Der Arbeitskorb 2 weist ein nach DIN 18065 ausgestaltetes Geländer 6 auf, wobei zwei feststehende Trittelemente 7 und ein schwenkbares Trittelement 7 als Lauffläche für den Bediener im Arbeitskorb 2 vorhanden sind. An der Rahmenkonstruktion 5 des Arbeitskorbes 2 sind an den Stirnseiten mittig schwenkbar und mehrdimensional bewegliche Schließkantensicherungselemente 10 angeordnet, wobei an deren Unterseite eine gummielastische Beschichtung angeordnet ist.

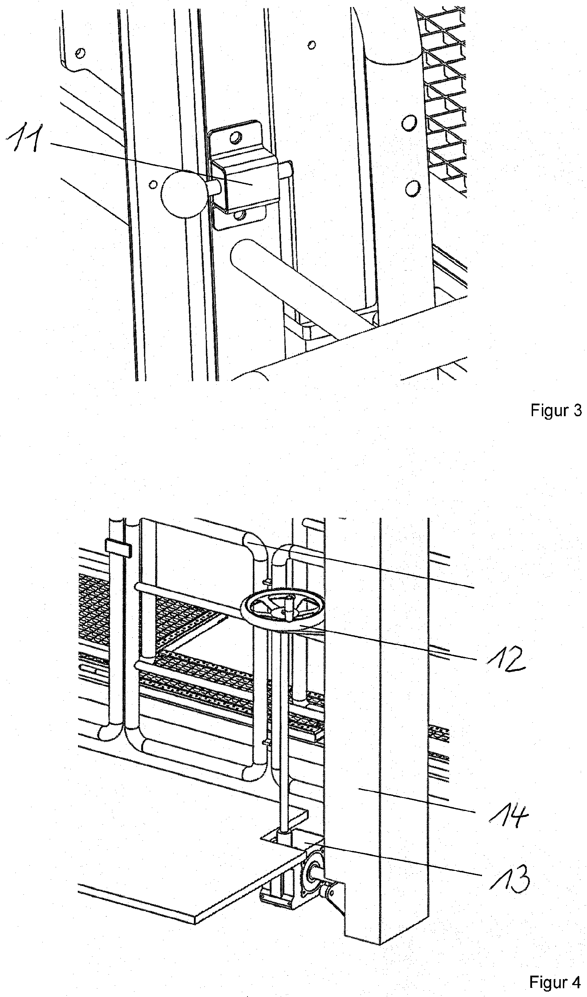

Die Arbeitsbühne 1 weist nach Figur 2 zudem eine Schließelement 8 in Form einer Sicherheitstür auf, die schwenkbar und mit einem Positionssicherungselement 9, das als Hebel-Sicherungsbolzen-Konstruktion ausgebildet ist, versehen ist. Nach Figur 3 weist die Tragkonstruktion 3 zudem einen selbstsichernden Arretierungsbolzen 11 auf, dessen Arretierungsstift in eine Materialausnehmung des linken Führungselementes 4 eingreift.

Zur Bedienung des Arbeitskorbes 2 wird in einem ersten Schritt der selbstsichernde Arretierungsbolzen 11 aus der Materialausnehmung des linken Führungselementes 4 entfernt und der Arbeitskorb 2 über das in Figur 1 dargestellte Griffelement nach unten bewegt. Zur Erleichterung der Bewegung des Arbeitskorbes 2 sind in den beiden senkrechten Ständern der Tragkonstruktion 3 jeweils geführte Kontergewichte 14 (durch Tragkonstruktion verdeckt) vorgesehen, die mit dem Arbeitskorb 2 über eine umgelenkte Seilverbindung verbunden sind.

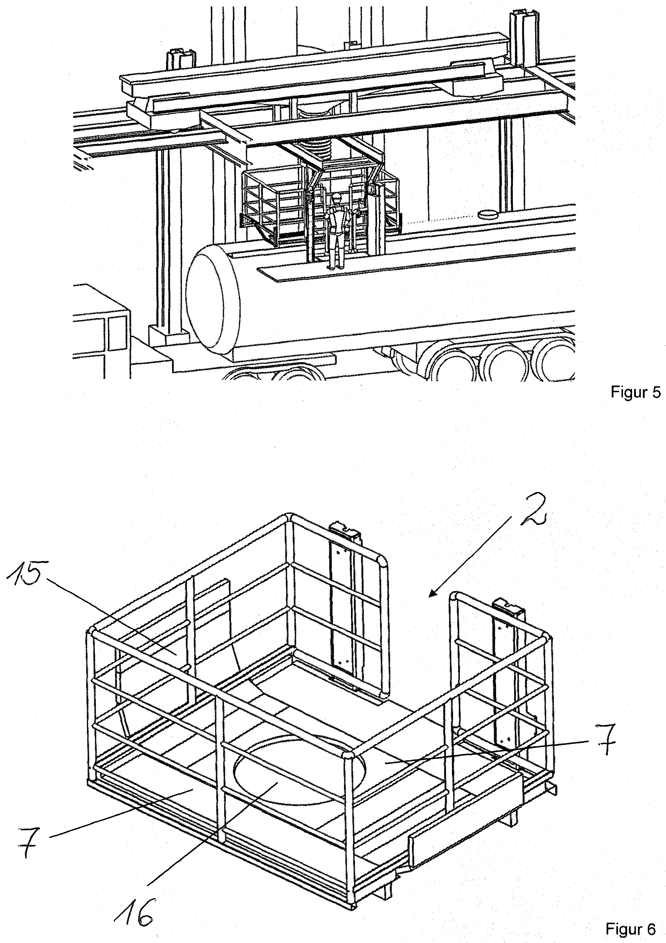

Nach dem Absenken des Arbeitskorbes 2 auf die gewünschte Höhe wird der Sicherungsbolzen des Positionssicherungselementes 9 mittels des Hebels in die vorgesehenen Aussparungen in der Tragkonstruktion 3 eingeführt, wodurch einerseits die Höhe des Arbeitskorbes 2 gesichert und zudem die Tür 8 für den Zugang zum Arbeitskorb 2 geöffnet ist. Nach den durchgeführten Tätigkeiten im Arbeitskorb 2 tritt der Bediener zurück auf den vorgesehenen Tritt der Tragkonstruktion 3. Anschließend wird die Tür 8 durch Betätigen des Hebels der Hebel-Sicherungsbolzen-Konstruktion verschlossen und gleichzeitig der Sicherungsbolzen 9 aus der Aussparung in der Tragkonstruktion 3 entfernt, wodurch der Verfahrweg nach oben freigegeben ist. Abschließend wird der Arbeitskorb 2 nach oben verfahren, bis der selbstsichernde Arretierungsbolzen 11 in die vorgesehene Materialausnehmung des linken Führungselementes 4 eingerastet ist und damit die Ausgangsposition des Arbeitskorbes 2 erreicht ist. Figur 4 zeigt eine alternative Variante der Arbeitsbühne, bei der die vertikale Bewegung des Arbeitskorbes 2 über die manuelle Bedienung einer Kurbel 12 erreicht wird, die mit einer Getriebeeinheit 13 verbunden ist, wobei die Getriebeeinheit 13 ein selbstsicherndes Schneckengetriebe ist. Figur 5 zeigt eine alternative Ausführung der Arbeitsbühne, bei der der Arbeitskorb 2 mit einem horizontal verfahrbaren Verfahrwagen verbunden ist.

Figur 6 zeigt eine alternative Ausführungsform des Arbeitskorbes 2, bei der der Arbeitskorb 2 mehrere Trittelemente 7 aufweist, die in ihrer Gesamtheit vollflächig die Trittfläche für einen Bediener darstellt und ein Abstürzen des Bedieners zwischen Geländer und Trittfläche verhindert. Das mittig im Arbeitskorb 2 angeordnete Einzelelement, das aus lamellenartigen Segmenten 15 gebildet ist, weist eine im Wesentlichen mittig angeordnete Öffnung 16 auf, die den sicheren Zugang zum Silo beziehungsweise Domdeckel beispielsweise des Silos eines Fahrzeuges ermöglicht. Um eine genaue Ausrichtung der Öffnung 16 über dem Domdeckel des Silos erreichen zu können, ist das Einzelelement mit den lamellenartigen Segmenten 15 bidirektional und horizontal verfahrbar. Die Verfahrbarkeit dieses aus den lamellenartigen Segmenten 15 und der Öffnung 16 zusammengesetzten Trittelementes hat den wesentlichen technischen Vorteil, dass einzelne Segmente 15 außerhalb des Arbeitskorbes 2 raumsparend verbracht und der Überhang dieses einzelnen Trittelementes außerhalb des Arbeitskorbes 2 wesentlich verringert wird. Das lamellenartige Trittelement wird durch einen elektrischen Antrieb verfahren.

### Bezugszeichenliste

- 1 -: Arbeitsbühne
- 2 -: Arbeitskorb
- 3 -: Tragkonstruktion
- 4 -: Führungselement
- 5 -: Rahmenkonstruktion
- 6 -: Absturzsicherungselement
- 7 -: Trittelement
- 8 -: Schließelement
- 9 -: Positionssicherungselement
- 10 -: Schließkantensicherungselement
- 11 -: Arretierungselement
- 12 -: Antriebselement
- 13 -: Getriebeeinheit
- 14 -: Kontergewichte
- 15 -: lamellenartiges Segment
- 16 -: Öffnung

## Patentansprüche

1. Arbeitsbühne (1) für Verladeeinrichtungen, aufweisend eine Tragkonstruktion (3), an der über mindestens ein Führungselement (4) ein mechanisch verfahrbarer Arbeitskorb (2), der eine Rahmenkonstruktion (5), mindestens ein Absturzsicherungselement (6) und mindestens ein Trittelement (7) aufweist, angeordnet ist,
**dadurch gekennzeichnet,**
**dass** die Tragkonstruktion (3) mindestens ein Schließelement (8) aufweist, dessen Öffnung mit dem Verfahrweg des Arbeitskorbes (2) gekoppelt ist und mit einem manuell zu betätigenden Positionssicherungselement (9) funktionell verbunden ist, wobei das Positionssicherungselement (9) in das mindestens eine Führungselement (4) eingreift, wobei der Arbeitskorb (2) in dessen Arbeitshöhe durch das in das mindestens eine Führungselement (4) eingreifende Schließelement (8) variabel positionierbar ist.

2. Arbeitsbühne nach Anspruch 1, bei der in der Tragkonstruktion (3) mindestens ein geführtes Kontergewicht (14) vorhanden ist, das mit dem Arbeitskorb (2) verfahrbar gekoppelt ist.

3. Arbeitsbühne nach Anspruch 1, bei der die Tragkonstruktion (3) beweglich mit einem decken- oder bodenseitigen Rollfahrwerk und/oder einem Verfahrwagen einer Verladegarnitur verbunden ist.

4. Arbeitsbühne nach Anspruch 1, bei der mehrere Führungselemente (4) vorhanden sind, deren Verfahrweg über einen gemeinsamen Antrieb synchronisiert sind.

5. Arbeitsbühne nach Anspruch 1, bei der das mindestens eine Führungselement (4) eine Linearführung ist.

6. Arbeitsbühne nach Anspruch 1, bei der die Rahmenkonstruktion (5) des Arbeitskorbes (2) mindestens ein mehrdimensional bewegliches Schließkantensicherungselement (10) aufweist.

7. Arbeitsbühne nach Anspruch 6, bei der das mindestens eine Schließkantensicherungselement (10) eine gummielastische Beschichtung aufweist und/oder als gummielastisches Hohlprofil ausgebildet ist.

8. Arbeitsbühne nach Anspruch 1, bei der die Tragkonstruktion (3) mindestens ein Arretierungselement (11) aufweist, das in ein im Führungselement (4) vorgesehenes Formelement eingreift.

9. Arbeitsbühne nach Anspruch 8, bei der das Arretierungselement (11) ein selbstsichernder Arretierungsbolzen ist.

10. Arbeitsbühne nach Anspruch 1, bei der der Arbeitskorb (2) mittels eines mechanischen Antriebselementes (12) manuell bewegbar ist.

11. Arbeitsbühne nach Anspruch 10, bei der das Antriebselement (12) eine manuelle Kurbeleinrichtung ist, die mit einer Getriebeeinheit (13) verbunden ist.

12. Arbeitsbühne nach Anspruch 11, bei der die Getriebeeinheit (13) ein Schneckengetriebe ist.

13. Arbeitsbühne nach Anspruch 1, bei der das Trittelement (7) aus mehreren Einzelelementen gebildet ist, wobei mindestens ein Einzelelement innerhalb des Arbeitskorbes bidirektional verfahrbar und/oder klappbar ist.

14. Arbeitsbühne nach Anspruch 13, bei dem mindestens ein im Arbeitskorb (2) angeordnetes Einzelelement aus mehreren lamellenartigen Segmenten (15) zusammengesetzt ist und eine Öffnung (16) aufweist.

15. Arbeitsbühne nach Anspruch 13, bei dem das mindestens eine Einzelelement mechanisch, hydraulisch und/oder elektrisch verfahrbar und/oder klappbar ist.

## Claims

1. Work platform (1) for loading devices, comprising a supporting structure (3) on which a mechanically movable work basket (2), which has a frame structure (5), at least one fall protection element (6) and at least one step element (7), is arranged via at least one guide element (4), **characterized in that** the supporting structure (3) comprises at least one closing element (8), the opening of which is coupled to the travel path of the work basket (2) and is functionally connected to a manually operated position-securing element (9), the position-securing element (9) engaging in the at least one guide element (4), the working height of the work basket (2) being variably positionable by means of the closing element (8) which engages in the at least one guide element (4).

2. Work platform according to claim 1, wherein at least one guided counterweight (14) is present in the supporting structure (3), which counterweight is movably coupled to the work basket (2).

3. Work platform according to claim 1, wherein the supporting structure (3) is movably connected to a ceiling- or floor-side trolley and/or a carriage of a loading system.

4. Work platform according to claim 1, wherein a plurality of guide elements (4) are present, the travel path of which is synchronized by means of a common drive.

5. Work platform according to claim 1, wherein the at least one guide element (4) is a linear guide.

6. Work platform according to claim 1, wherein the frame construction (5) of the work basket (2) comprises at least one multi-dimensionally movable closing edge safety element (10).

7. Work platform according to claim 6, wherein the at least one closing edge securing element (10) has a resilient coating and/or is designed as a resilient hollow profile.

8. Work platform according to claim 1, wherein the supporting structure (3) comprises at least one locking element (11) which engages in a shaped element provided in the guide element (4).

9. Work platform according to claim 8, wherein the locking element (11) is a self-locking locking pin.

10. Work platform according to claim 1, wherein the work basket (2) is manually movable by means of a mechanical drive element (12).

11. Work platform according to claim 10, wherein the drive element (12) is a manual crank device connected to a gear unit (13).

12. Work platform according to claim 11, wherein the gear unit (13) is a worm gear.

13. Work platform according to claim 1, wherein the step element (7) is formed from a plurality of individual elements, at least one individual element being bidirectionally movable and/or foldable within the work basket.

14. Work platform according to claim 13, wherein at least one individual element arranged in the work basket (2) is composed of a plurality of slat-like segments (15) and comprises an opening (16).

15. Work platform according to claim 13, wherein the at least one individual element is mechanically, hydraulically and/or electrically movable and/or foldable.

## Revendications

1. Plate-forme de travail (1) pour des dispositifs de chargement, présentant une structure porteuse (3) sur laquelle est disposée, par l'intermédiaire d'au moins un élément de guidage (4), une nacelle de travail (2) pouvant être déplacée mécaniquement et présentant une structure formant cadre (5), au moins un élément de protection contre les chutes (6) et au moins un élément formant marche (7), **caractérisée en ce que** la structure porteuse (3) présente au moins un élément de fermeture (8)
dont l'ouverture est accouplée à la course de déplacement de la nacelle de travail (2) et est reliée de manière fonctionnelle à un élément de blocage de position (9) à actionner manuellement, dans laquelle l'élément de blocage de position (9) vient en prise dans l'au moins un élément de guidage (4), dans laquelle la nacelle de travail (2) peut être positionnée de manière variable à sa hauteur de travail par l'élément de fermeture (8) venant en prise dans l'au moins un élément de guidage (4).

2. Plate-forme de travail selon la revendication 1, dans laquelle au moins un contrepoids guidé (14) est prévu dans la structure porteuse (3), lequel est accouplé de manière à pouvoir être déplacé à la nacelle de travail (2).

3. Plate-forme de travail selon la revendication 1, dans laquelle la structure porteuse (3) est reliée de manière mobile à un mécanisme de roulement côté plafond ou côté sol et/ou à un chariot de déplacement d'une garniture de chargement.

4. Plate-forme de travail selon la revendication 1, dans laquelle plusieurs éléments de guidage (4) sont prévus, dont les courses de déplacement sont synchronisées par l'intermédiaire d'un entraînement commun.

5. Plate-forme de travail selon la revendication 1, dans laquelle l'au moins un élément de guidage (4) est un guidage linéaire.

6. Plate-forme de travail selon la revendication 1, dans laquelle la structure formant cadre (5) de la nacelle de travail (2) présente au moins un élément de blocage de bord de fermeture (10) mobile dans plusieurs dimensions.

7. Plate-forme de travail selon la revendication 6, dans laquelle l'au moins un élément de blocage de bord de fermeture (10) présente un revêtement en caoutchouc et/ou est conçu comme un profilé creux en caoutchouc.

8. Plate-forme de travail selon la revendication 1, dans laquelle la structure porteuse (3) présente au moins un élément d'arrêt (11) qui vient en prise dans un élément de forme prévu dans l'élément de guidage (4).

9. Plate-forme de travail selon la revendication 8, dans laquelle l'élément d'arrêt (11) est un boulon d'arrêt autobloquant.

10. Plate-forme de travail selon la revendication 1, dans laquelle la nacelle de travail (2) peut être déplacée manuellement au moyen d'un élément d'entraînement (12) mécanique.

11. Plate-forme de travail selon la revendication 10, dans laquelle l'élément d'entraînement (12) est un dispositif formant manivelle manuelle qui est relié à une unité formant engrenage (13).

12. Plate-forme de travail selon la revendication 11, dans laquelle l'unité formant engrenage (13) est un engrenage à vis sans fin.

13. Plate-forme de travail selon la revendication 1, dans laquelle l'élément formant marche (7) est formé de plusieurs éléments individuels, dans laquelle au moins un élément individuel peut être déplacé et/ou rabattu de manière bidirectionnelle à l'intérieur de la nacelle de travail.

14. Plate-forme de travail selon la revendication 13, dans laquelle au moins un élément individuel disposé dans la nacelle de travail (2) est composé de plusieurs segments (15) en forme de lamelles et présente une ouverture (16).

15. Plate-forme de travail selon la revendication 13, dans laquelle l'au moins un élément individuel peut être déplacé et/ou rabattu mécaniquement, hydrauliquement et/ou électriquement.
